# FASCICULE DE BREVET EUROPEEN

(11) **EP 3 473 491 B1**
(45) Date de publication et mention de la délivrance du brevet: **02.12.2020**
(21) Numéro de dépôt: 18201475.3
(22) Date de dépôt: 19.10.2018
(51) Int. Cl.: B60M 1/34

(54) **SYSTÈME D'ALIMENTATION ÉLECTRIQUE D'UN VÉHICULE PAR LE SOL ET PROCÉDÉ DE RENFORCEMENT ASSOCIÉ**
SYSTEM ZUR STROMVERSORGUNG EINES FAHRZEUGS ÜBER DEN BODEN, UND ENTSPRECHENDES VERSTÄRKUNGSVERFAHREN
GROUND-LEVEL POWER SUPPLY SYSTEM FOR A VEHICLE AND ASSOCIATED REINFORCEMENT METHOD

(30) Priorité: 19.10.2017 FR 1759812
(43) Date de publication de la demande: 24.04.2019
(73) Titulaire: ALSTOM Transport Technologies, 93400 Saint-Ouen (FR)
(72) Inventeur: GAUTIER, Yann, 51220 HERMONVILLE (FR); GARDILLE, Quentin, 51430 TINQUEUX (FR); RIBALKA, Florian, 51470 SAINT-MEMMIE (FR)
(74) Mandataire: Lavoix

(56) Documents cités:
- EP-A1- 1 043 186
- EP-A1- 2 907 690
- FR-A1- 2 938 800

## Description

La présente invention concerne un système d'alimentation électrique par le sol et un procédé de renforcement d'un tel système.

La présente invention se rapporte en particulier au domaine de la maintenance des moyens d'alimentation électrique de véhicules de transport ferroviaire.

On connait un système d'alimentation électrique par le sol, mettant en œuvre, entre deux rails d'un tramway, un troisième rail implanté dans le sol, lequel est conçu pour alimenter en électricité le tramway par l'intermédiaire d'un patin ou « frotteur » monté en partie inférieure du tramway, ce patin étant mis en contact frottant le long du rail d'alimentation au fur et à mesure du déplacement du tramway. Le rail d'alimentation est segmenté en plusieurs tronçons successifs, qui sont mis sélectivement sous tension seulement lorsqu'ils sont recouverts par un tramway. Ainsi, le système d'alimentation peut être installé sans risque en ville.

EP1043186A1 divulgue un assemblage d'alimentation par le sol pour véhicule électrique, comprenant des éléments-supports en forme de profilé, recevant des paires de pistes conductrices. FR 2 938 800 A1 décrit un segment de rail d'alimentation électrique, comprenant un profilé de support en matériau isolant. Le profilé comprend une âme percée de conduits longitudinaux, recevant des câbles d'alimentation électrique, et reçoit, sur une face supérieure de l'âme, une piste d'alimentation électrique, logée dans une gorge longitudinale de la face supérieure. Le profilé repose sur le sol par l'intermédiaire d'une face inférieure de l'âme. Pour former un rail d'alimentation, on dispose plusieurs segments les uns à la suite des autres, en assemblant leur profilé respectif à l'aide d'éclisses. Entre deux segments successifs, un espace longitudinal est laissé libre, cet espace étant latéralement bordé par des flasques de l'éclisse. L'éclisse comprend également un couvercle ou capot, d'épaisseur égale à la piste, pour fermer cet espace par le haut. Le couvercle est supporté par des nervures prévues sur les faces internes des flasques, à la même hauteur que la gorge de la face supérieure. Le couvercle relie ainsi les pistes respectives des deux segments, de sorte que le glissement du patin est effectué sans accroc d'une piste à l'autre en passant par le couvercle, d'égale épaisseur.

Cependant, les rails d'alimentations électriques comportant de tels couvercles sont susceptibles d'être abimés pour les lieux de forte affluence. En effet, le roulement répété d'un trafic urbain dense sur le rail d'alimentation et/ou une forte utilisation du rail d'alimentation par les tramways, sont susceptibles de détériorer les appuis du couvercle, notamment les nervures de l'éclisse, et/ou le profilé. Ainsi, suite à cette usure, le couvercle peut se retrouver enfoncé ou incliné par rapport à sa position initiale, ou pour le moins ne plus être à la même hauteur que la piste d'alimentation. Du vandalisme peut également être à l'origine de cette détérioration. En conséquence, le passage du patin au niveau du couvercle est susceptible de générer un choc bruyant à chaque passage. Un tel choc augmente la vitesse de dégradation du rail d'alimentation et du patin. Dans certaines situations, le passage du patin peut même entraîner un retournement ou une éjection du couvercle, particulièrement préjudiciable.

Par conséquent, l'invention vise à résoudre les inconvénients susmentionnés de l'état de la technique, en proposant un nouveau système d'alimentation électrique de durée de vie augmentée et étant compatible avec les équipements existants, de sorte à augmenter leur durée de vie.

L'invention a pour objet un système d'alimentation électrique d'un véhicule par le sol, le système comprenant :
- une piste, qui définit une trajectoire du système, la piste étant conçue pour être en contact avec un frotteur de captation du véhicule, lors d'un déplacement du véhicule le long de la trajectoire, la piste comprenant :
   ∘ au moins un segment de piste se terminant par une extrémité de segment dans un sens direct de la trajectoire, et
   ∘ au moins un capot, qui est disposé dans le prolongement du segment de piste le long de la trajectoire, dans le sens direct, au-delà de l'extrémité de segment ;
- au moins une poutre, qui supporte le segment de piste et qui s'étend le long de la trajectoire en se terminant par une extrémité de coupure dans le sens direct.

Selon l'invention, le système comprend, en outre, au moins une pièce de renfort, qui est rapportée contre l'extrémité de coupure, de façon à prolonger la poutre dans le sens direct, la pièce de renfort étant essentiellement en matière plastique et supportant le capot.

Grâce à l'invention, la pièce de renfort essentiellement en matière plastique est disposée à l'extrémité de la poutre, qui est une zone sensible à l'usure. Cette pièce de renfort peut aisément être installée à l'extrémité de coupure de la poutre et remplacée par une autre pièce de renfort si nécessaire, ce qui prolonge la durée de vie du système d'alimentation et évite notamment un remplacement complet de la poutre, ou l'introduction d'un matériau de scellement pour combler des parties abîmées de la poutre. Cette pièce de renfort est notamment moins coûteuse, plus résistante et plus facile à installer, tout en permettant un positionnement précis du capot, en comparaison des autres solutions mentionnées. Il est possible d'installer une telle pièce de renfort au sein d'un système d'alimentation électrique existant, en mettant en oeuvre un procédé de renforcement défini ci-après. Etant essentiellement en matière plastique, la pièce de renfort est préférentiellement électriquement isolante et facile à modifier sur place par usinage, par exemple à l'aide d'outils à main, de façon à adapter cette pièce de renfort au cas d'espèce.

D'autres caractéristiques optionnelles et avantageuses de l'invention sont définies dans ce qui suit :
- la matière plastique de la pièce de renfort est du polyamide-6, alors que la poutre est préférentiellement en matériau composite de fibres de verre pultrudé ;
- la poutre comprend une gorge de poutre, qui s'étend le long de la trajectoire, jusqu'à l'extrémité de coupure dans le sens direct, le segment de piste étant logé dans la gorge de poutre ; et la pièce de renfort comprend une gorge de renfort, qui prolonge la gorge de poutre dans le sens direct, le capot étant disposé au moins en partie dans la gorge de renfort en étant supporté par la pièce de renfort ;
- la poutre comprend deux bordures de poutre, bordant la gorge de poutre ; et la pièce de renfort comprend deux bordures de renfort, bordant la gorge de renfort en prolongeant les bordures de gorge dans le sens direct, le capot étant disposé au moins en partie dans la gorge de renfort sans recouvrir les bordures de renfort ;
- la poutre comprend deux alvéoles d'antenne, qui s'étendent dans la poutre, respectivement le long des bordures de poutre, et débouchent à l'extrémité de coupure ; la pièce de renfort comprend deux ailes de renfort, qui sont saillantes et opposées, chacune des deux ailes de renfort supportant l'une des bordures de renfort, la pièce de renfort comprenant deux conduits d'antenne, chacun des deux conduits d'antenne traversant l'une des deux ailes de renfort, la pièce de renfort étant disposée de façon que chacun des deux conduits d'antenne prolonge respectivement l'une des deux alvéoles d'antenne dans le sens direct ; et le système comprend au moins un câble d'antenne, qui traverse l'une des deux alvéoles d'antenne et les deux conduits d'antenne ;
- le système comprend un support sur lequel reposent la poutre et la pièce de renfort ; et la pièce de renfort comprend un socle, par l'intermédiaire duquel la pièce de renfort repose sur le support, le socle comprenant au moins une encoche de scellement, s'étendant parallèlement à la trajectoire et s'ouvrant radialement par rapport à la trajectoire, un matériau de scellement introduit dans l'encoche de scellement assurant la fixation de la pièce de renfort au support ;
- le capot est fixé sur la pièce de renfort à l'aide d'au moins un dispositif mécanique de fixation, le dispositif mécanique comprenant un élément primaire, par exemple une vis ou un rivet, et un élément secondaire auquel l'élément primaire est attaché, par exemple un écrou ; la pièce de renfort comprend un orifice d'accès, qui débouche dans le sens direct sur une face d'accès de la pièce de renfort ; et l'élément primaire du dispositif mécanique traverse le capot et la pièce de renfort de façon à s'étendre jusque dans l'orifice d'accès, dans lequel est logé l'élément secondaire ;
- la poutre comprend au moins une alvéole de câblage, qui s'étend le long de la trajectoire et qui débouche à l'extrémité de coupure ; la pièce de renfort comprend au moins un conduit de câblage, la pièce de renfort étant disposée de façon que le conduit de câblage prolonge l'alvéole de câblage dans le sens direct ; et le système comprend au moins un câble d'alimentation de la piste, lequel traverse l'alvéole de câblage et le conduit de câblage ;
- ladite au moins une pièce de renfort comprend : la pièce de renfort rapportée contre l'extrémité de coupure, de façon à prolonger la poutre dans le sens direct, et une autre pièce de renfort, les pièces de renfort étant longitudinalement espacées afin de laisser libre et de délimiter un espace inter-poutre du système ; le capot est supporté à la fois par les deux pièces de renfort, en reliant les pièces de renfort longitudinalement à la manière d'un pont, le capot délimitant l'espace inter-poutre par le dessus.

L'invention a également pour objet un procédé de renforcement d'un système d'alimentation électrique d'un véhicule par le sol, le système comprenant :
- une piste, qui définit une trajectoire du système, la piste étant conçue pour être en contact avec un frotteur de captation du véhicule, lors d'un déplacement du véhicule le long de la trajectoire, la piste comprenant :
   ∘ au moins un segment de piste se terminant par une extrémité de segment dans un sens direct de la trajectoire, et
   ∘ au moins un capot, qui est disposé dans le prolongement du segment de piste le long de la trajectoire, dans le sens direct, au-delà de l'extrémité de segment ;
- au moins une poutre, qui supporte le segment de piste et qui s'étend le long de la trajectoire en se terminant par une extrémité de poutre dans le sens direct, la poutre comprenant une partie à remplacer, s'étendant à partir de l'extrémité de poutre, dans un sens opposé au sens direct, le capot étant supporté par la partie à remplacer ;

Selon l'invention, le procédé comporte les étapes successives suivantes :
- séparation de la partie à remplacer de la poutre, de sorte que la poutre se termine par une extrémité de coupure dans le sens direct ;
- adjonction d'au moins une pièce de renfort de l'extrémité de coupure, en rapportant la pièce de renfort contre, ou en regard de, l'extrémité de coupure, de façon à prolonger la poutre dans le sens direct, la pièce de renfort étant essentiellement en matière plastique ; et
- montage du capot sur la pièce de renfort, de sorte que le capot est supporté par la pièce de renfort.

De façon préférentielle, la poutre présente au moins une alvéole vide, qui s'étend le long de la trajectoire et qui débouche à l'extrémité de coupure ; et le procédé comprend une étape d'introduction d'au moins une barre de renfort en matière plastique dans l'alvéole vide, de façon ajustée, pour soutenir l'alvéole vide, la matière plastique de la barre de renfort étant de préférence la même matière plastique que la pièce de renfort.

L'invention sera mieux comprise à l'aide de la description qui suit, donnée à titre d'exemple non limitatif et faite en référence aux dessins annexés, dans lesquels :
- La figure 1 est une vue en perspective d'un système d'alimentation électrique dans un état initial ;
- Les figures 2 et 3 sont des vues de l'intérieur du système de la figure 1, après que l'on ait effectué certaines étapes d'un procédé de renforcement conforme à l'invention, notamment l'ajout d'une pièce de renfort en ce qui concerne la figure 3 ;
- La figure 4 est une vue similaire à la figure 1, du système d'alimentation électrique de la figure 1 dans un état renforcé, incluant la pièce de renfort de la figure 3 ; et
- La figure 5 est une vue en perspective de la pièce de renfort des figures 3 et 4.

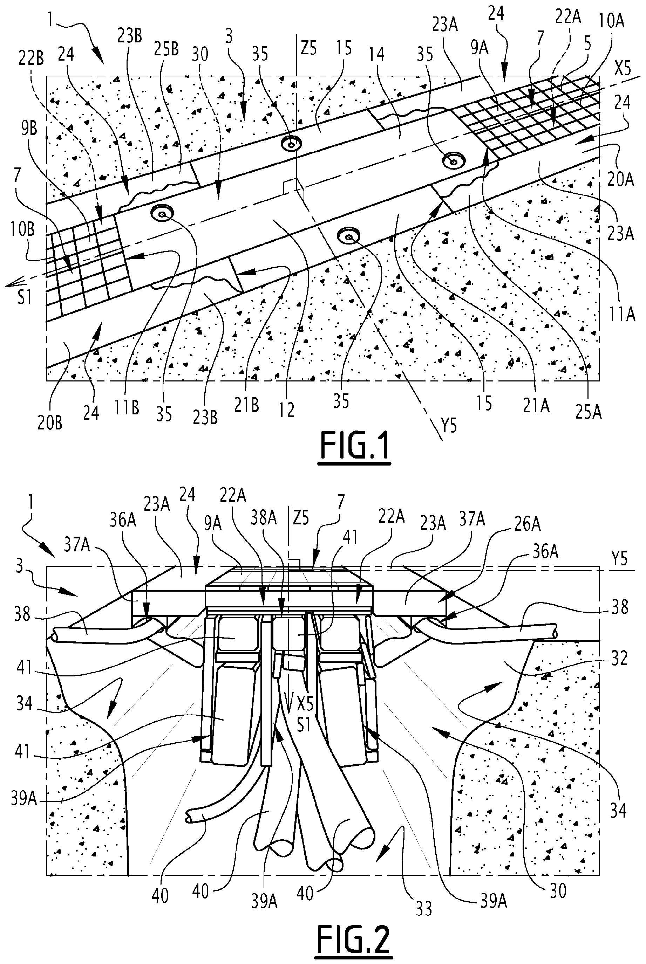

La figure 1 illustre un système 1 d'alimentation électrique d'un ou plusieurs véhicules, non illustrés, de préférence un ou plusieurs véhicules sur rails, en particulier du genre tramway. De préférence, l'énergie fournie par le système 1 est utilisée pour assurer la traction du véhicule, en alimentant une motorisation embarquée sur le véhicule. Par exemple, le système 1 fournit une tension électrique comprise entre 350 et 2000 V, par exemple 750 V. Cette alimentation est effectuée par le sol, dans la mesure où le système 1 est disposé à hauteur ou à proximité de la surface du sol 3.

Sur la figure 1, le système 1 est dans un état initial. Cet état initial correspond à la situation où le système n'a pas encore été modifié par le procédé de renforcement conforme à l'invention. Dans cet état initial, le système peut avoir été détérioré, par exemple par usure ou vandalisme, comme expliqué en partie introductive. On peut également appliquer le procédé de renforcement sur le système 1 alors qu'il est à l'état initial, sans usure ou vandalisme.

Le système 1 comprend une piste 5, dont une partie seulement est visible sur les figures. La piste 5 s'étend selon un certain chemin, qui est une trajectoire longitudinale, représentée par le trait discontinu X5 sur les figures. Dans la partie du système visible aux figures, la trajectoire X5 est rectiligne. Toutefois, la trajectoire X5 peut présenter des courbures que la piste 5 suit, de façon à définir des virages pour le véhicule.

On définit un repère géométrique mobile le long de la trajectoire X5. Ce repère comprend la trajectoire X5, un axe transversal Y5 perpendiculaire à la trajectoire X5 et parallèle au sol 3, ainsi qu'un axe de hauteur Z5, perpendiculaire à la trajectoire X5 et à l'axe Y5. Les termes tels que « longitudinal » et « longueur » font référence à une orientation parallèle à la trajectoire X5. Les termes tels que « transversal », « latéral » ou « largeur » font référence à une orientation parallèle à l'axe Y5. Les termes tels que « hauteur », « haut », « au-dessus », « bas » ou « en-dessous » font référence à une orientation parallèle à l'axe Z5. Plus précisément, « haut » ou « au-dessus » font référence à une direction parallèle à l'axe Z5 orientée vers le ciel lorsque le système 1 est installé dans le sol 3, alors que « bas » ou « au-dessous » font référence à une direction de sens opposé. On définit un sens direct S1 de la trajectoire X5.

La piste 5 présente une surface de contact 7, dans un plan X5-Y5 défini par la trajectoire X5 et l'axe Y5. La surface 7 est tournée vers le haut.

Dans le cas présent, le système 1 est encastré dans le sol 3, de sorte que la surface 7 est sensiblement coplanaire avec la surface du sol 3, ou, de préférence, légèrement au-dessus. Pour cela, le système 1 est partiellement enterré dans un sillon longitudinal 32 du sol 3. Le sillon 32 est préférentiellement formé par un berceau en béton, en goudron renforcé ou tout autre matériau de propriétés mécaniques similaires, ce berceau formant également la surface du sol 3 aux abords de la piste 5. Comme visible sur la figure 2, le sillon 32, dont la section transverse présente par exemple une forme générale de U ou de V, comprend un fond 33. Le sillon 32 comprend également deux parois latérales 34 obliques ou parallèles à l'axe Z5, reliant le fond 33 à la surface du sol 3.

En variante, la piste 5 est au-dessus du sol 3, de sorte que la surface de contact 7 est elle-même saillante au-dessus du sol 3, le système n'étant pas ménagé dans un sillon mais disposé sur la surface du sol 3.

La surface 7 est conçue pour être en contact, de façon glissante ou frottante, avec un frotteur ou patin de captation du véhicule à alimenter. Dans le cas d'un véhicule ferroviaire, on prévoit en outre un ou plusieurs rails de circulation des véhicules le long de la trajectoire X5. Ces rails s'étendant préférentiellement latéralement à distance de la piste 5, de part et d'autre de la piste 5, en suivant des trajectoires parallèles à la trajectoire X5, afin de guider le véhicule le long de la trajectoire X5 et que son frotteur puisse être maintenu en contact avec la surface 7 tout le long du déplacement du véhicule.

La piste 5 comprend plusieurs segments de pistes, dont deux segments de pistes 9A et 9B visibles sur la figure 1. Chaque segment de piste 9A et 9B s'étend le long de la trajectoire X5, en étant délimité par deux extrémités longitudinales opposées, dites «extrémités de segment ». Une extrémité de segment 11A du segment 9A et une extrémité de segment 11B du segment 9B sont visibles sur la figure 1. Le segment 9A se termine par l'extrémité 11A dans le sens direct S1, alors que le segment 9B se termine par l'extrémité 11B dans un sens opposé. Les extrémités 11A et 11B sont longitudinalement espacées l'une de l'autre.

Dans le présent exemple, chaque segment de piste 9A et 9B comprend successivement, longitudinalement, un tronçon isolant débutant à l'extrémité de segment, un tronçon conducteur puis un autre tronçon isolant se terminant à l'autre extrémité de segment. Par « isolant » et « conducteur », on fait référence à une propriété électrique, en considération de l'énergie électrique en jeu pour l'alimentation des véhicules. Les différents tronçons des segments de piste forment chacun une partie de la surface de contact 7 de la piste 5. Seul l'un des tronçons isolants de chaque segment 9A et 9B est visible sur la figure 1, respectivement avec la référence 10A et 10B. Le tronçon conducteur de chaque segment, qui est longitudinalement entre les deux tronçons isolants du segment concerné, évolue entre un état alimenté et un état non alimenté en énergie électrique. Lorsque le tronçon conducteur est alimenté et en contact avec le frotteur d'un véhicule, de l'énergie est transmise au véhicule. Lorsque le tronçon conducteur n'est pas alimenté, aucune énergie électrique n'est transmise. Chaque segment de piste est préférentiellement de largeur constante le long de la trajectoire X5.

Plus généralement, chaque segment de piste est susceptible de comprendre un ou plusieurs tronçons conducteurs et/ou un ou plusieurs tronçons isolants, répartis longitudinalement, en fonction de l'application.

La piste 5 comprend plusieurs capots, dont un capot 12 est visible sur la figure 1. Chaque capot est préférentiellement en matériau métallique, tel qu'un acier inoxydable. Chaque capot 12 forme de préférence une partie de la surface de contact 7. En particulier, le capot 12 comprend une partie centrale 14, qui forme la partie susmentionnée de la surface de contact 7.

Chaque capot relie longitudinalement deux segments de piste successifs. Deux segments de piste successifs sont séparés longitudinalement par un capot, en particulier par la partie centrale 14 du capot concerné, et, de préférence, par un seul capot. Dans le présent exemple, le capot 12, plus particulièrement la partie centrale 14, est disposé dans le prolongement longitudinal du segment de piste 9A dans le sens direct S1, au-delà de l'extrémité 11A dans ce sens S1. En l'espèce, le capot 12, plus particulièrement la partie centrale 14, est rapporté contre, c'est-à-dire en contact avec, l'extrémité 11A. Dans l'exemple, le capot 12, plus particulièrement la partie centrale 14, est disposé dans le prolongement longitudinal du segment de piste 9B, dans un sens opposé au sens S1, au-delà de l'extrémité 11B. Dans l'exemple, le capot 12, plus particulièrement la partie centrale 14, est rapporté contre, c'est-à-dire en contact avec, l'extrémité 11B. Le capot 12 est longitudinalement disposé entre les extrémités 11A et 11B, en particulier en ce qui concerne sa partie centrale 14.

En variante, on prévoit que le capot 12 est longitudinalement à une faible distance longitudinale de l'extrémité 11A et/ou de l'extrémité 11B.

La partie centrale 14 de chaque capot est préférentiellement de largeur constante le long de la trajectoire X5, de préférence de la même largeur que les segments de piste, comme c'est le cas sur la figure 1 pour le capot 12 et les segments 9A et 9B. Dans ce cas, les bords longitudinaux de la partie centrale du capot et des segments de piste sont longitudinalement alignés.

Le système 1 comprend plusieurs poutres réparties longitudinalement, dont notamment une poutre 20A et une poutre 20B visibles sur la figure 1. Chaque poutre s'étend longitudinalement et se termine par deux extrémités longitudinales opposées nommées « extrémités de poutre ». Dans l'exemple illustré sur la figure 1, la poutre 20A se termine longitudinalement par une extrémité de poutre 21A, dans le sens direct S1, alors que la poutre 20B se termine par une extrémité de poutre 21B dans le sens opposé. Dans le cas d'un système enterré, comme pour l'exemple illustré, chaque poutre repose sur le fond 33 du sillon 32 et relie transversalement les parois latérales 34, c'est-à-dire que chaque poutre occupe tout le volume interne du sillon 32. Ainsi, le sillon 32 sert de support sur lequel repose la poutre, mais tout autre support pouvant être mis en œuvre à la place en fonction de la situation.

De préférence, chaque poutre est une pièce d'un seul tenant, réalisée en matériau électriquement isolant, compte-tenu de l'énergie électrique d'alimentation. On peut alternativement prévoir que chaque poutre est un assemblage de plusieurs pièces, ces pièces étant néanmoins d'un seul tenant d'une extrémité à l'autre de la poutre. Chaque poutre est par exemple réalisée en composite de fibres de verre, ou tout autre matériau satisfaisant à cette application, par exemple un béton fibré. En particulier, chaque poutre constitue un profilé, ou est le résultat d'un assemblage de profilés s'étendant chacun d'une extrémité longitudinale à l'autre de la poutre. Le profilé est exemple obtenu par pultrusion ou extrusion.

Les poutres sont longitudinalement espacées les unes des autres. En particulier, les extrémités 21A et 21B sont longitudinalement espacées l'une de l'autre de façon à définir un espace inter-poutre 30 entre deux poutres successives. L'espace 30 est délimité par le fond 33 et les deux poutres 20A et 20B. Lorsque le système est à l'état initial comme sur la figure 1, l'espace 30 est délimité en particulier par une face transversale de chacune des poutres 20A et 20B, chacune de ces faces transversales s'étendant dans des plans parallèles au plan Y5-Z5 défini par les axes Y5 et Z5, ces faces transversales étant respectivement formées aux extrémités 21A et 21B. Dans cet espace 30, le système 1 comprend avantageusement de l'équipement électrique, non représenté, comme par exemple un boîtier de raccordement ou un boîtier de jonction, ou tout autre moyen de commande ou d'alimentation des segments de piste adjacents à l'espace 30.

Chaque poutre supporte l'un des segments de piste, c'est-à-dire soutient ce segment de piste par le dessous. Chaque poutre est donc disposée sous le segment de piste concerné. Les poutres 20A et 20B supportent respectivement les segments 9A et 9B, ces segments 9A et 9B étant disposés sur le dessus des poutres 20A et 20B. De préférence, chaque poutre comprend, sur le dessus, une gorge de poutre qui s'étend longitudinalement, d'une extrémité de poutre à l'autre extrémité de poutre, chaque segment de piste étant logé dans l'une des gorges de poutre.

Comme visible sur la figure 1, les poutres 20A et 20B comprennent respectivement une gorge de poutre 22A et une gorge de poutre 22B, dans lesquelles sont respectivement logés les segments 9A et 9B. La gorge de poutre 22A se termine longitudinalement à l'extrémité de poutre 21A dans le sens S1, alors que la gorge de poutre 22B se termine longitudinalement à l'extrémité de poutre 21 B.

Au voisinage des extrémités de poutre, les gorges de poutre de deux poutres successives supportent le capot, c'est-à-dire soutiennent le capot par le dessous, par l'intermédiaire de sa partie centrale. Sur la figure 1, l'extrémité 21A est longitudinalement distante de l'extrémité 11A dans le sens direct S1, de façon à s'étendre jusque sous le capot 12. L'extrémité 21B est longitudinalement distante de l'extrémité 11B dans le sens opposé au sens S1, de façon à s'étendre jusque sous le capot 12. Sur la figure 1, la partie centrale 14 du capot 12 est supportée :
- par la gorge 22A, pour l'extrémité longitudinale du capot 12 à l'opposé du sens S1 ;
- par la gorge 22B, pour l'autre extrémité longitudinale du capot 12 dans le sens direct S1.

La partie centrale 14 du capot 12 forme un pont reliant les extrémités de 21A et 21B, de façon à délimiter l'espace inter-poutre 30 par le dessus. Tout équipement logé dans l'espace 30 est ainsi protégé par le capot 12.

En partie supérieure, chaque poutre comprend avantageusement deux bordures de poutre longitudinales, bordant latéralement la gorge de poutre, au contact latéral du segment de poutre concerné. En particulier, les poutres 20A et 20B comprennent respectivement une paire de bordures 23A et 23B, bordant les gorges 22A et 22B. Chaque bordure 23A ou 23B s'étend d'une extrémité longitudinale à l'autre de la poutre concernée. En particulier, les bordures 23A s'étendent jusqu'à l'extrémité 21A dans le sens direct S1 et les bordures 23B jusqu'à l'extrémité 21B en sens inverse. Le système 1 comprend une surface de bordure 24 tournée vers le haut, dont une partie est formée par les bordures 23A et 23B. La surface de bordure 24 s'étend dans un plan parallèle au, et en dessous du, plan de la surface de contact 7. La surface 24 s'étend au niveau, ou légèrement au-dessus, de la surface du sol 3.

Chaque capot, comme le capot 12 du présent exemple, présente avantageusement deux parties latérales 15, disposées latéralement de part et d'autre de la partie centrale 14. Chaque partie latérale 15 s'étend transversalement à l'opposé l'une de l'autre à partir de la partie centrale 14. Les parties latérales 15 s'étendent respectivement dans le prolongement longitudinal des bordures 23A et 23B, et forment une partie de la surface de bordure 24.

De préférence, chaque capot, en particulier leurs parties latérales 15 du capot concerné, relie longitudinalement les bordures de deux poutres successives. Dans le présent exemple, les parties latérales 15 sont respectivement disposées dans le prolongement longitudinal des bordures 23A dans le sens direct S1, au-delà de l'extrémité 21A dans ce sens S1. En l'espèce, les parties latérales 15 du capot 12, sont chacune rapportées contre, c'est-à-dire en contact avec, l'extrémité 21A, latéralement au niveau des bordures 23A. Dans l'exemple, les parties latérales 15, sont disposées dans le prolongement longitudinal des bordures 23B, dans un sens opposé au sens S1, au-delà de l'extrémité 21B. Dans l'exemple, les parties latérales 15 sont rapportées contre, c'est-à-dire en contact avec, l'extrémité 21B, latéralement au niveau des bordures 23A. Au moins une partie du capot 12 est longitudinalement disposé entre les extrémités 21A et 21B, en particulier en ce qui concerne les parties latérales 15. Ainsi, le capot 12 ne recouvre pas les bordures 23A et 23B. Pour cela, les parties latérales 15 sont longitudinalement plus courtes que la partie centrale 14. Longitudinalement, les parties latérales 15 sont avantageusement disposées dans une position médiane du capot 12, de sorte que la partie centrale 14 dépasse longitudinalement, dans les deux sens, par rapport aux parties latérales 15.

Comme pour FR 2 938 800 A1, une éclisse métallique, non représentée, est avantageusement prévue dans l'espace 30, pour fixer solidement les poutres 20A et 20B ensemble, tout en supportant le capot 12 par ses parties latérales 15. Une telle éclisse ménage alors un espace libre pour loger l'équipement électrique susmentionné dans l'espace 30.

Le capot 12 est avantageusement fixé à ses différents supports susmentionnés par une ou plusieurs vis, boulons, rivets, ou tous dispositif mécaniques de fixation équivalents. Sur la figure 1, quatre vis 35 traversent le capot 12, deux étant prévues respectivement au travers des parties latérales 15, pour être implantées dans l'éclisse sous-jacente, ou dans tout élément d'implantation fixé sur les parois 34, deux étant prévues au travers de la partie centrale 14, pour être implantées respectivement dans les gorges de poutre 22A et 22B.

De façon préférentielle, chaque poutre comprend plusieurs alvéoles longitudinales, traversant la poutre d'une extrémité de poutre à l'autre. Un ou plusieurs câbles d'alimentation, d'antenne et/ou de télécommunication traversent longitudinalement les poutres en s'étendant le long et au sein d'une ou plusieurs de ces alvéoles. Ces alvéoles et câbles sont discutés plus bas.

Dans son état initial illustré sur la figure 1, chaque poutre 20A et 20B comprend respectivement une partie à remplacer 25A et 25B. La partie 25A s'étend à partir de l'extrémité de poutre 21A, dans le sens opposé au sens direct S1. La partie 25B s'étend à partir de l'extrémité de poutre 21B, dans le sens direct S1. La partie à remplacer inclut avantageusement tout ou partie de l'extrémité de poutre concernée, dont par exemple une partie de la gorge et/ou des bordures. De ce fait, les parties 25A et 25B supportent le capot 12, notamment les extrémités de sa partie centrale 14. Si l'on prévoit une éclisse dans l'espace 30, on peut également souhaiter la remplacer, ou pour le moins la renforcer. On peut souhaiter remplacer le capot 12. On peut notamment souhaiter remplacer tous ces éléments parce qu'ils sont abîmées ou usés, comme c'est le cas pour les parties 25A et 25B illustrées sur la figure 1.

En cas d'usure des parties 25A, 25B et de l'éventuelle éclisse, à l'état initial, le capot 12 peut se retrouver mal positionné, par exemple enfoncé vers le bas ou pivoté, déformé voire ébréché, et ainsi différer de la représentation de la figure 1 et de la description qui précède. Les parties 25A et 25B peuvent également être déformées, présenter une mauvaise orientation ou être ébréchées.

Pour remédier à cela, on met en œuvre un procédé de renforcement du système 1. Comme illustré sur la figure 2, le procédé inclut préférentiellement un démontage du capot 12, et optionnellement un démontage de tout ou partie de l'éclisse, si une éclisse est prévue, notamment pour accéder à l'espace 30. On effectue ensuite une étape de séparation, pour enlever les parties 25A et 25B de leur poutre 20A et 20B respective. Une fois les parties 25A et 25B retirées, les poutres se terminent par une extrémité de coupure. L'extrémité de coupure 26A de la poutre 20A est visible sur la figure 2. Pour effectuer cette séparation des parties 25A et 25B, on effectue avantageusement une découpe de ces poutres 20A et 20B, par exemple à la scie, à la meuleuse, ou tout autre moyen approprié.

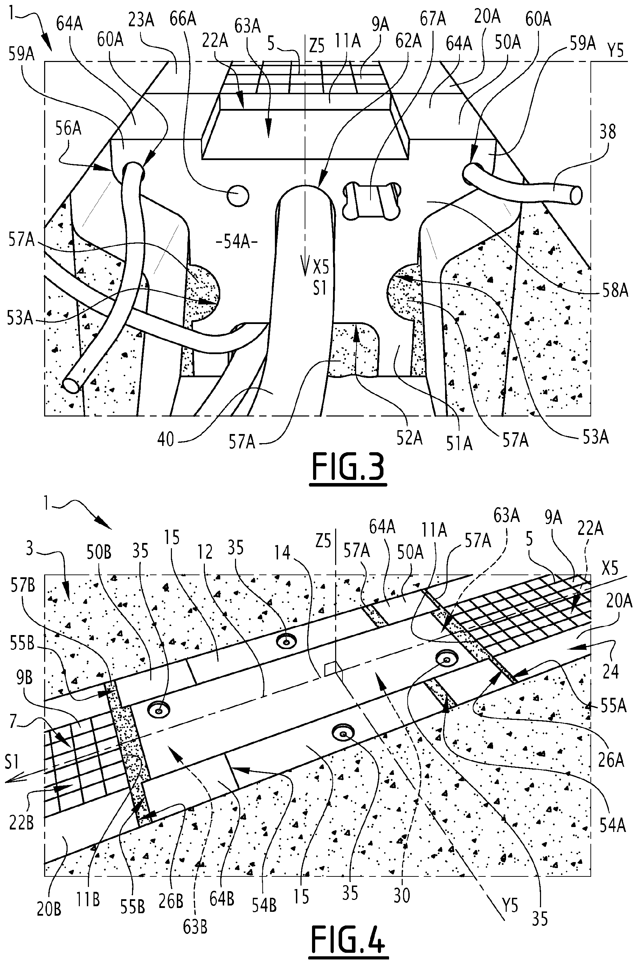

L'extrémité de coupure 26A forme une face transversale, essentiellement plane, de la poutre 20A, tournée dans le sens direct S1, s'étendant parallèlement au plan Y5-Z5. L'extrémité 26B de coupure de la poutre 20B, visible en partie sur la figure 4, forme une face transversale de la poutre 20B, tournée dans le sens opposé au sens direct S1, s'étendant parallèlement au plan Y5-Z5. L'espace 30 est alors longitudinalement agrandi. En particulier, la gorge 22A et 22B et les bordures 23A et 23B se terminent alors respectivement aux extrémités de coupure 26A et 26B.

Pour l'étape de séparation, on prévoit avantageusement que l'extrémité de coupure soit longitudinalement située entre l'extrémité de poutre d'origine et l'extrémité de segment voisine. Pour la poutre 20A, l'extrémité de coupure 26A est située, le long la trajectoire X5, dans le sens opposé au sens direct S1 par rapport à l'extrémité 21A d'origine. Pour la poutre 20B, l'extrémité de coupure 26B est située, le long de la trajectoire X5, dans le sens direct S1 par rapport à l'extrémité 21B d'origine. Dans l'exemple illustré, l'extrémité de coupure 26A est longitudinalement au niveau de l'extrémité de segment 11A, afin d'augmenter au maximum l'espace 30 dans le sens longitudinal, sans toutefois altérer le segment de piste 9A. On pourrait néanmoins prévoir que l'extrémité de coupure traverse le segment de piste d'origine, de sorte qu'une partie de ce segment d'origine est séparée au cours de l'étape de séparation.

La figure 2 montre que la poutre 20A du présent exemple est dans un état détérioré par rapport à son état neuf. Les alvéoles susmentionnées de la poutre 20A débouchent à l'extrémité de coupure 26A.

La figure 2 montre que la poutre 20A du présent exemple comprend une partie supérieure pourvue de deux ailes latérales 37A, qui sont latéralement saillantes et tournées dans des directions opposées. Les ailes 37A s'étendant latéralement de part et d'autre de la gorge 22A et portent chacune l'une des bordures 23A. Longitudinalement au travers de ces ailes 37A, la poutre 20A comprend, parmi les alvéoles susmentionnées, respectivement deux alvéoles 36A, dites « alvéoles d'antenne ». Chaque alvéole 36A s'étend dans la poutre 20A le long et au-dessous des bordures 23A, en débouchant à l'extrémité de coupure 26A, une fois l'étape de séparation effectuée. Le système comprend deux câbles d'antenne 38, représentés coupés sur la figure 2. Chaque câble 38 traverse respectivement l'une des deux alvéoles d'antenne 36A. Ces câbles d'antenne 38 servent à détecter la présence du véhicule au-dessus de la piste 5, de façon à alimenter la piste 5 si un tel véhicule est présent, et à ne pas alimenter la piste 5 si le véhicule est absent, ou si un véhicule ou un objet non autorisé est présent. En fonction de la situation, on peut prévoir que les deux câbles d'antenne 38 sont interconnectés pour former une boucle, ou prévoit un seul câble d'antenne formant une boucle et traversant les deux alvéoles 36A.

La figure 2 montre que la poutre 20A comporte en partie supérieure, parmi les alvéoles susmentionnées, une ou plusieurs alvéoles 38A, par exemple trois, disposées en-dessous de la gorge 22A, notamment à hauteur des ailes 37A.

La figure 2 montre que la poutre 20A comporte une partie inférieure, s'étendant en-dessous de la partie supérieure, en particulier sous les alvéoles 38A. De préférence, la partie inférieure est latéralement moins étendue, c'est-à-dire plus mince transversalement, que la partie supérieure, de façon à correspondre à la forme de V du de la section du sillon 32, et optionnellement pour permettre d'accueillir l'éclisse sous les ailes 37A, latéralement de part et d'autre de la partie inférieure, entre les parois 34 du sillon 32. La poutre 20A repose sur le fond 33 via cette partie inférieure. La partie inférieure comprend, parmi les alvéoles susmentionnées, une ou plusieurs alvéoles 39A, dont au moins une, sinon plusieurs, est une « alvéole de câblage ». Le système 1 comprend avantageusement un ou plusieurs câbles 40, représentés coupés sur la figure 2, contenus longitudinalement dans une ou plusieurs de ces alvéoles 39A. Un câble 40 est préférentiellement destiné à l'alimentation en énergie électrique de la piste 5. Alternativement un ou plusieurs des câbles 40 est par exemple un câble de masse, de terre ou de télécommunication.

De préférence, les caractéristiques de la poutre 20A sur la figure 2 se retrouvent symétriquement sur la poutre 20B.

Le procédé comprend optionnellement, après l'étape de séparation, une étape d'introduction longitudinale d'une ou plusieurs barres de renfort 41, dans une ou plusieurs des alvéoles de la poutre 20A, afin de renforcer la poutre 20A en soutenant ces alvéoles, notamment les alvéoles dont les parois sont fissurées, cassées ou réduites en poussière par l'usure. Chaque barre 41 est préférentiellement ajustée, c'est-à-dire présente une section transversale qui est serrée dans l'alvéole concernée. On préfère introduire de telles barres 41 seulement dans les alvéoles vides. Toutefois, on peut introduire de telles barres 41 dans une alvéole occupée, notamment par un câble.

De préférence, l'étape d'introduction comprend l'introduction successive de plusieurs barres 41 longitudinalement les unes à la suite des autres dans une même alvéole de la poutre 20A, la dernière barre introduite étant utilisée pour pousser dans le sens opposé au sens S1 les barres 41 précédemment introduites dans la même alvéole. Ainsi, on peut remplir une partie longitudinale non négligeable de cette alvéole, s'étendant à partir de l'extrémité de coupure 26A, avec une succession longitudinale de barres 41, afin de soutenir cette alvéole. Cela s'avère utile notamment lorsque la poutre 20A et la trajectoire X5 sont courbes.

De préférence, la section transversale de chaque barre est de forme générale quadrilatère, par exemple rectangulaire ou carré comme illustré sur la figure 2. On préfère que les coins de la section quadrilatère soient chanfreinés, ce qui facilite l'opération d'introduction des barres 41 par un meilleur coulissement longitudinal de ces dernières dans les alvéoles.

Chaque barre 41 est avantageusement en matière plastique, qui est électriquement isolante en considération des grandeurs électriques en jeu pour l'alimentation du véhicule. De préférence, la matière plastique choisie est une matière plastique à base de polyamide-6 (PA6), tel que de l'Ertalon (marque déposée), qui assure une bonne isolation électrique, tout en présentant des caractéristiques mécaniques suffisantes pour assurer le renforcement de la poutre 20A et une résistance élevée à l'environnement. Ce matériau plastique présente l'avantage de pouvoir être facilement retravaillé et/ou recoupé in-situ, juste avant l'étape d'introduction, afin d'adapter la géométrie des barres au cas d'espèce.

Le procédé de renforcement comprend, après l'étape de séparation des parties à remplacer, et après l'étape optionnelle d'introduction de barres de renfort, une étape d'adjonction d'une pièce de renfort pour chaque extrémité de coupure, c'est-à-dire en remplacement de chaque partie à remplacer. De préférence, une seule pièce de renfort est prévue par extrémité de coupure. Dans le présent exemple, tel qu'illustré aux figures 3 à 5, on procède à l'adjonction d'une pièce de renfort 50A pour l'extrémité de coupure 26A de la poutre 20A et d'une pièce de renfort 50B, partiellement visible à la figure 4, pour l'extrémité de coupure 26B de la poutre 20B. Pour cette adjonction, on rapporte, c'est-à-dire que l'on monte, la pièce de renfort 50A ou 50B contre l'extrémité de coupure 26A ou 26B concernée. Pour l'extrémité 26A, la pièce 50A prolonge longitudinalement la poutre 20A dans le sens direct S1. Pour l'extrémité 26B, la pièce 50B prolonge longitudinalement la poutre 20B dans le sens opposé.

De préférence, les deux pièces de renfort 50A et 50B sont identiques, symétriques ou pour le moins similaires dans leurs caractéristiques. On décrit donc seulement la pièce de renfort 50A, cette description s'appliquant mutatis mutandis pour la pièce 50B, notamment en remplaçant « A » par « B » pour désigner les mêmes caractéristiques, en ce qui concerne les signes de référence sur les dessins. Il en est de même pour les segments 9A et 9B, ainsi que les poutres 20A et 20B.

De préférence la pièce de renfort 50A est un profilé longitudinal, présentant une section transversale invariante, ou essentiellement invariante, sur toute la longueur de la pièce 50A. Lorsque la pièce 50A est en place dans le système 1 contre l'extrémité de coupure 26A, sa longueur est parallèle à la trajectoire X5. Dans ce qui suit, on assimile par commodité la trajectoire X5 à un axe de longueur de la pièce 50A, l'axe Y5 à un axe transversal de la pièce 50A et l'axe Z5 à un axe de hauteur de la pièce 50A.

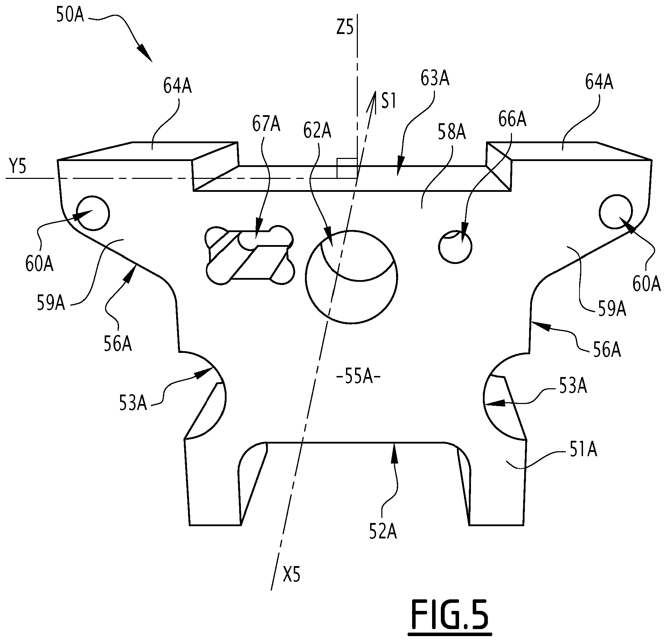

La pièce 50A comprend deux faces transversales, c'est-à-dire orthogonales à la trajectoire X5, dont :
- une face 54A visible sur la figure 3, dite « face d'accès », qui est tournée dans le sens direct S1 ; et
- une face 55A visible sur la figure 5, tournée en sens opposé.

Les faces 54A et 55A forment les extrémités longitudinales de la pièce 50A, en étant reliées par une face de contour 56A, fuyant parallèlement à la trajectoire X5. De même, les faces 55B et 55B forment les extrémités longitudinales de la pièce 50B, comme visible sur la figure 4.

Lorsque la pièce 50A est rapportée contre l'extrémité de coupure 26A, la face 55A est préférentiellement en appui plan contre la face transversale de la poutre 20A formée à l'extrémité 26A. Comme visible sur la figure 4, une couche de matériau de scellement 57A est préférentiellement interposée entre la face 55A et la face transversale de la poutre 20A pour fixer ces faces entre elles.

Lorsque la pièce 50A est rapportée contre l'extrémité 26A, la pièce 50A, et la face 54A a pour vocation de remplacer l'extrémité de poutre 21A d'origine. La face 54A est alors avantageusement à une position longitudinale similaire à celle qu'occupait l'extrémité 21A avant séparation et est laissée libre.

De préférence, la face de contour 56A épouse le contour de la section transversale en U ou en V du sillon 32, de sorte à ne pas nécessiter une modification locale de cette section transversale. De préférence, la pièce 50A présente une section transversale dont le contour est analogue, ou est inclus à l'intérieur du, contour de la section transversale de la poutre 20A. Les sections transversales de la poutre 20A et de la pièce 50A sont en correspondance lorsque la pièce 50A équipe le système 1, comme visible sur la figure 3.

Dans le présent exemple, la pièce 50A comprend un socle 51A, qui constitue une partie inférieure de la pièce 50A et est avantageusement de forme transversale analogue à la partie inférieure susmentionnée de la poutre 20A. La pièce 50A repose sur le fond 33, ou tout support sur lequel la poutre 20A repose. Le socle 51A épouse la forme de la partie inférieure du sillon 32, en particulier le fond 33 et le bas des parois 34.

Le socle 51A comprend, dans le présent exemple, une encoche de scellement inférieure 52A, disposée transversalement au milieu du socle 51A, et s'ouvrant vers le bas. Cette encoche 52A est formée par la face de contour 56A. Lorsque la pièce repose sur le fond 33, l'encoche 52A ménage une cavité libre longitudinale, délimitée par le fond 33 et le contour de l'encoche 52A, en bas du socle 51A.

Le socle 51A comprend, dans le présent exemple, deux encoches de scellement latérales 53A opposées, formées par la face 56A au niveau du socle 51A, au-dessus de l'encoche 52A. Les encoches 53A sont ouvertes parallèlement à l'axe Y5, vers l'extérieur, de façon à ménager chacune une cavité, délimitée par l'encoche 53A concernée et l'une des parois 34.

De façon plus générale, le socle 51A comprend une ou plusieurs encoches de scellement longitudinales, telles que les encoches 52A et 53A, débouchant radialement, c'est-à-dire latéralement ou vers le bas, par rapport à la trajectoire X5. Un matériau de scellement 57A est introduit dans chaque encoche de scellement, pour assurer la fixation de la pièce de renfort 50A au sillon 32, ou à tout support prévu pour la poutre 20A. Ce matériau de scellement est par exemple un liant chimique, une colle-mortier, un mortier, un ciment ou tout autre matériau approprié. La mise en œuvre d'un tel matériau de scellement assure une fixation efficace de la pièce 50A, tout en permettant d'ajuster la position de cette pièce 50A si la géométrie du support ne correspond pas exactement à celle de la pièce 50A.

La pièce de renfort 50A comprend, au-dessus du socle 51A, une partie supérieure 58A. Cette partie supérieure 58A présente avantageusement une forme transversale similaire à celle de la poutre 20A. En particulier, la partie supérieure 58A présente une forme de queue d'aronde, tout comme la poutre 20A. Pour cela, la pièce 50A comprend avantageusement, en partie supérieure 58A, deux ailes latérales de renfort 59A, qui sont saillantes et opposées latéralement, et sont disposées dans le prolongement longitudinal dans le sens S1 des ailes 37A. En particulier, les ailes 59A dépassent du socle 51A, parallèlement à l'axe Y5.

La figure 4 représente le système 1 alors qu'il est dans un état renforcé, toutes les étapes du procédé ayant été exécutées.

Le procédé comprend une étape de montage du capot 12 sur la pièce de renfort 50A, de sorte que le capot est supporté par la pièce 50A, en particulier par la partie supérieure 58A. Comme illustré sur la figure 4, dans le cas d'exemple, le capot 12 est supporté à la fois par les deux pièces de renfort 50A et 50B, en reliant ces dernières longitudinalement à la manière d'un pont. On note que les pièces de renfort 50A et 50B sont longitudinalement espacées afin de laisser libre et à délimiter l'espace inter-poutre 30, de préférence en conservant sensiblement la géométrie et les dimensions initiales de cet espace 30.

La pièce 50A comprend préférentiellement une gorge de renfort 63A, qui prolonge longitudinalement la gorge de poutre 22A dans le sens direct S1. La gorge 63A est formée par la face 56A, en haut de la partie supérieure 58A, entre les ailes 59A. La gorge 63A est ouverte vers le haut, et s'étend de la face 54A à la face 55A. On conçoit la pièce 50A pour que la gorge 63A soit en correspondance avec la gorge 22A, afin de remplacer la partie séparée de la gorge 22A. En particulier, le fond des gorges 22A et 63A s'étendent dans un même plan, alors que leurs bords latéraux sont écartés et positionnés de la même façon.

Sur la figure 4, on observe que la partie centrale 14 du capot 12 est supportée :
- par la gorge 63A de la pièce 50A, pour l'extrémité longitudinale du capot 12 à l'opposé du sens S1 ;
- par une gorge 63B de la pièce 50B, pour l'autre extrémité longitudinale du capot 12 dans le sens direct S1.

De préférence, la partie centrale 14 recouvre l'essentiel, voir la totalité, des gorges 63A et 63B, sans dépasser latéralement de ces gorges 63A et 63B.

De façon plus générale, le capot est disposé au moins en partie dans les deux gorges de renfort en étant supporté par les pièces de renfort 50A et 50B.

La pièce 50A comprend deux bordures de renfort 64A, bordant latéralement la gorge 63A, de part et d'autre de cette gorge 63A. Les bordures 64A prolongent longitudinalement les bordures 23A dans le sens direct S1. Chaque bordure 64A s'étend longitudinalement de la face 54A à la face 55A, en formant une partie de la surface de bordure 24, au même titre que la partie des bordures 23A d'origine qui a été séparée. Chaque bordure de renfort 64A est formée sur le dessus de l'une des ailes 59A.

Le capot 12 est en partie disposé la gorge 63A, sans toutefois recouvrir les bordures 64A. Les parties latérales 15 s'étendent respectivement dans le prolongement longitudinal des bordures 64A dans le sens direct S1, et forment une partie de la surface de bordure 24. Ainsi, les parties latérales 15 relient longitudinalement les bordures 64A de la pièce 50A à des bordures 64B similaires de la pièce 50B. On peut prévoir que les parties latérales 15 sont chacune rapportées contre, c'est-à-dire en contact avec, la face 54A de la pièce 50A, tout comme la face 54B, selon la trajectoire X5. Toutefois, comme dans l'exemple illustré, s'il existe un écart longitudinal ou jeu entre les parties 15 et une ou deux faces parmi les faces 54A et 54B, on peut prévoir de combler cet espace par une couche de matériau de scellement 57A ou 57B, latéralement au niveau des bordures 23A.

Ainsi, grâce aux pièces 50A et 50B, le capot 12 est donc disposé de façon adéquate, comme à l'origine, en particulier de façon à former :
- une partie de la surface de contact 7, dans un même plan que la partie de surface de contact 7 formée par les segments de piste adjacents, et
- une partie de la surface de bordure 24, dans un même plan que les parties de surface de bordure 24 formées par les bordures de poutre adjacentes.

Comme illustré sur la figure 4, au moins une partie des vis 35 ou moyens de fixation équivalents, sont implantés dans chaque pièce 50A et 50B au travers de la partie centrale 14 du capot 12. Dans le présent exemple, une vis 35 fixe le capot 12, via une extrémité longitudinale de la partie centrale, contre la gorge 63A.

De préférence, la pièce 50A comprend préférentiellement un ou plusieurs conduits de câblage 62A longitudinaux, notamment disposés en partie supérieure 58A, entre les ailes 59A. Chaque conduit 62A traverse longitudinalement la pièce 50A, de la face 54A à la face 55A. La pièce de renfort 50A est adjointe de façon que chaque conduit de câblage 62A prolonge longitudinalement une partie de l'une des alvéoles 39A de la poutre 20A dans le sens direct S1, en particulier l'alvéole 39A dans laquelle les câbles 40 sont disposés. Plus précisément, le conduit 62A est en regard d'une partie supérieure de l'alvéole 39A. Lors de l'adjonction de la pièce 50A, on s'assure de passer les câbles 40 dans les conduits 62A de la pièce 50A. De préférence, comme illustré sur les figures 3 et 5, on prévoit un seul conduit de câblage 62A, disposé en bas de la partie supérieure 58A, c'est-à-dire de façon centrale dans la pièce 50A. Chaque conduit 62A présente avantageusement une section transversale plus étroite que celle de son alvéole 39A correspondante, de façon à stabiliser le positionnement du câble 40 concerné en son sein. Chaque conduit 62A présente avantageusement une section circulaire, ou toute section correspondant à celle du câble 40 concerné, de façon à être ajusté autour de ce câble 40.

La pièce 50A comprend préférentiellement deux conduits d'antenne 60A, chaque conduit d'antenne traversant longitudinalement l'une des deux ailes 59A, de la face 54A à la face 55A. La pièce 50A est disposée de façon que chaque conduit 60A prolonge longitudinalement respectivement l'une des deux alvéoles d'antenne 36A de la poutre 20A dans le sens direct S1. Au cours de l'adjonction de la pièce 50A, on s'assure que le câble d'antenne 38 traverse les deux conduits d'antenne 60A. Chaque conduit 60A présente avantageusement une section transversale plus étroite que celle des alvéoles d'antenne 36A, de façon à stabiliser le positionnement du câble d'antenne 38 en son sein. Chaque conduit 60A présente avantageusement une section circulaire, ou toute section correspondant à celle du câble d'antenne 38 de façon à être ajusté autour de ce câble 38.

La pièce 50A comprend préférentiellement un orifice longitudinal 67A, dit « orifice d'accès », qui est traversant de la face 54A à la face 55A. Au minimum, l'orifice 67A est borgne et débouche sur la face d'accès 54A dans le sens direct S1 de façon à permettre un accès longitudinal à son volume interne. Cet orifice 67A s'étend en partie supérieure 58A de la pièce 50A, juste en dessous de la gorge 63A, de préférence latéralement à côté du conduit 62A.

Au moins l'une des vis 35 traverse la partie centrale 14 du capot 12, puis la pièce 50A à partir de la gorge 63A, de façon à déboucher à l'intérieur de l'orifice d'accès 67A. Un écrou, toute pièce de serrage équivalente interagissant avec la vis 35 ou le moyen de fixation envisagé, peut ainsi être introduit via l'orifice 67A. La vis 35 associée à l'écrou forme un boulon. Une fixation solide et facile à mettre en œuvre du capot 12 sur la pièce 50A est ainsi rendue possible.

De manière plus générale, on prévoit un dispositif mécanique de fixation comprenant un élément primaire, comme la vis du présent exemple, ou encore un rivet, et une partie secondaire, comme un écrou dans le présent exemple, ou toute pièce d'appui ou de serrage à laquelle l'élément primaire peut être fixé. L'élément primaire traverse le capot et la pièce de renfort alors que l'élément secondaire est logé, de préférence entièrement, dans l'orifice d'accès. L'élément primaire et l'élément secondaire sont connectés ensemble à l'intérieur de l'orifice d'accès, par exemple par vissage, emboîtement, serrage, sertissage ou soudage, de façon à assurer la fixation du capot sur la pièce de renfort.

Les différents orifices susmentionnés peuvent être prévus à l'avance, lors de la fabrication de la pièce 50A. Toutefois, on peut également prévoir un ou plusieurs pré-perçages longitudinaux traversants ou borgnes. Par exemple, le pré-perçage 66A visible sur les figures 3 et 5 traverse la partie supérieure 58A de la face 54A à 55A. En fonction de la situation, un ou plusieurs pré-perçages de la pièce 50A peuvent donner lieu à la formation in-situ, avant ou après l'étape d'adjonction de la pièce 50A, d'orifices de différentes fonctions. Par exemple, on peut former l'orifice 67A à partir d'un pré-perçage similaire au pré-perçage 66A.

La pièce 50A est particulièrement polyvalente et adaptable à la situation.

On peut prévoir un ou plusieurs moyens mécaniques de fixation longitudinaux, tels que des vis ou équivalents, affleurant la face 54A ou disposés dans des orifices débouchant sur cette face 54A, les moyens de fixation traversant la pièce 50A en étant implantés dans les barres 41, afin de fixer ou stabiliser ces barres 41.

La pièce 50A est essentiellement en matière plastique, c'est-à-dire composée pour une partie essentielle en matière plastique, par exemple à plus de 95% de sa masse. De préférence, la pièce 50A est totalement dans cette matière plastique. La pièce 50A est ainsi électriquement isolante face à l'énergie électrique en jeu dans le système 1. En tant que matière plastique, on préfère du polyamide-6, en particulier de l'Ertalon, qui présente les avantages susmentionnés. De préférence, la matière plastique des barres 41 est la même matière plastique que celle de la pièce 50A.

De préférence, la pièce 50A est réalisée en une seule pièce d'un seul tenant, par exemple par extrusion, pultrusion, voire par moulage.

L'invention peut également avoir pour objet la pièce de renfort 50A ou 50B en tant que telle, comportant une ou plusieurs des caractéristiques définies dans ce qui précède.

## Revendications

1. Système (1) d'alimentation électrique d'un véhicule par le sol (3), le système (1) comprenant :
- une piste (5), qui définit une trajectoire (X5) du système (1), la piste (5) étant conçue pour être en contact avec un frotteur de captation du véhicule, lors d'un déplacement du véhicule le long de la trajectoire (X5), la piste (5) comprenant :
∘ au moins un segment de piste (9A, 9B) se terminant par une extrémité de segment (11A, 11B) dans un sens direct (S1) de la trajectoire (X5), et
∘ au moins un capot (12), qui est disposé dans le prolongement du segment de piste (9A, 9B) le long de la trajectoire (X5), dans le sens direct (S1), au-delà de l'extrémité de segment (11A, 11B) ;
- au moins une poutre (20A, 20B), qui supporte le segment de piste (9A, 9B) et qui s'étend le long de la trajectoire (X5) en se terminant par une extrémité de coupure (26A, 26B) dans le sens direct (S1) ;
**caractérisé en ce que** le système (1) comprend, en outre, au moins une pièce de renfort (50A, 50B), qui est rapportée contre l'extrémité de coupure (26A, 26B), de façon à prolonger la poutre (20A, 20B) dans le sens direct (S1), la pièce de renfort (50A, 50B) étant essentiellement en matière plastique et supportant le capot (12).

2. Système (1) selon la revendication 1, **caractérisé en ce que** la matière plastique de la pièce de renfort (50A, 50B) est du polyamide-6, alors que la poutre (20A, 20B) est préférentiellement en matériau composite de fibres de verre pultrudé.

3. Système (1) selon l'une quelconque des revendications précédentes, **caractérisé en ce que** :
- la poutre (20A, 20B) comprend une gorge de poutre (22A, 22B), qui s'étend le long de la trajectoire (X5), jusqu'à l'extrémité de coupure (26A, 26B) dans le sens direct (S1), le segment de piste (9A, 9B) étant logé dans la gorge de poutre (22A, 22B) ; et
- la pièce de renfort (50A, 50B) comprend une gorge de renfort (63A, 63B), qui prolonge la gorge de poutre (22A, 22B) dans le sens direct (S1), le capot (12) étant disposé au moins en partie dans la gorge de renfort (63A, 63B) en étant supporté par la pièce de renfort (50A, 50B).

4. Système (1) selon la revendication 3, **caractérisé en ce que** :
- la poutre (20A, 20B) comprend deux bordures de poutre (23A, 23B), bordant la gorge de poutre (22A, 22B) ; et
- la pièce de renfort (50A, 50B) comprend deux bordures de renfort (64A, 64B), bordant la gorge de renfort (63A, 63B) en prolongeant les bordures de gorge dans le sens direct (S1), le capot (12) étant disposé au moins en partie dans la gorge de renfort (63A, 63B) sans recouvrir les bordures de renfort (64A, 64B).

5. Système (1) selon la revendication 4, **caractérisé en ce que** :
- la poutre (20A, 20B) comprend deux alvéoles d'antenne (36A), qui s'étendent dans la poutre (20A, 20B), respectivement le long des bordures de poutre (23A, 23B), et débouchent à l'extrémité de coupure (26A, 26B) ;
- la pièce de renfort (50A, 50B) comprend deux ailes de renfort (37A), qui sont saillantes et opposées, chacune des deux ailes de renfort (37A) supportant l'une des bordures de renfort (64A, 64B), la pièce de renfort (50A, 50B) comprenant deux conduits d'antenne (60A), chacun des deux conduits d'antenne (60A) traversant l'une des deux ailes de renfort (37A), la pièce de renfort (50A, 50B) étant disposée de façon que chacun des deux conduits d'antenne (60A) prolonge respectivement l'une des deux alvéoles d'antenne (36A) dans le sens direct (S1) ; et
- le système (1) comprend au moins un câble d'antenne (38), qui traverse l'une des deux alvéoles d'antenne (36A) et les deux conduits d'antenne (60A).

6. Système (1) selon l'une quelconque des revendications précédentes, **caractérisé en ce que** :
- le système (1) comprend un support (32) sur lequel reposent la poutre (20A, 20B) et la pièce de renfort (50A, 50B) ; et
- la pièce de renfort (50A, 50B) comprend un socle (51A), par l'intermédiaire duquel la pièce de renfort (50A, 50B) repose sur le support (32), le socle (51A) comprenant au moins une encoche de scellement (52A, 53A), s'étendant parallèlement à la trajectoire (X5) et s'ouvrant radialement par rapport à la trajectoire (X5), un matériau de scellement (57A) introduit dans l'encoche de scellement (52A, 53A) assurant la fixation de la pièce de renfort (50A, 50B) au support (32).

7. Système (1) selon l'une quelconque des revendications précédentes, **caractérisé en ce que** :
- le capot (12) est fixé sur la pièce de renfort (50A, 50B) à l'aide d'au moins un dispositif mécanique de fixation (35), le dispositif mécanique (35) comprenant un élément primaire, par exemple une vis ou un rivet, et un élément secondaire auquel l'élément primaire est attaché, par exemple un écrou ;
- la pièce de renfort (50A, 50B) comprend un orifice d'accès (67A), qui débouche dans le sens direct (S1) sur une face d'accès (54A) de la pièce de renfort (50A, 50B) ; et
- l'élément primaire du dispositif mécanique (35) traverse le capot (12) et la pièce de renfort (50A, 50B) de façon à s'étendre jusque dans l'orifice d'accès (67A), dans lequel est logé l'élément secondaire.

8. Système (1) selon l'une quelconque des revendications précédentes, **caractérisé en ce que** :
- la poutre (20A, 20B) comprend au moins une alvéole de câblage (39A), qui s'étend le long de la trajectoire (X5) et qui débouche à l'extrémité de coupure (26A, 26B) ;
- la pièce de renfort (50A, 50B) comprend au moins un conduit de câblage (62A), la pièce de renfort (50A, 50B) étant disposée de façon que le conduit de câblage (62A) prolonge l'alvéole de câblage dans le sens direct (S1) ; et
- le système (1) comprend au moins un câble d'alimentation (40) de la piste (5), lequel traverse l'alvéole de câblage (39A) et le conduit de câblage (62A).

9. Système selon l'une quelconque des revendications précédentes, **caractérisé en ce que** :
- ladite au moins une pièce de renfort (50A, 50B) comprend :
∘ la pièce de renfort (50A) rapportée contre l'extrémité de coupure (26A, 26B), de façon à prolonger la poutre (20A, 20B) dans le sens direct (S1), et
∘ une autre pièce de renfort (50B), les pièces de renfort (50A, 50B) étant longitudinalement espacées afin de laisser libre et de délimiter un espace inter-poutre (30) du système (1) ;
- le capot (12) est supporté à la fois par les deux pièces de renfort (50A, 50B), en reliant les pièces de renfort (50A, 50B) longitudinalement à la manière d'un pont, le capot (12) délimitant l'espace inter-poutre (30) par le dessus.

10. Procédé de renforcement d'un système (1) d'alimentation électrique d'un véhicule par le sol (3), le système (1) comprenant :
- une piste (5), qui définit une trajectoire (X5) du système (1), la piste (5) étant conçue pour être en contact avec un frotteur de captation du véhicule, lors d'un déplacement du véhicule le long de la trajectoire (X5), la piste (5) comprenant :
∘ au moins un segment de piste (9A, 9B) se terminant par une extrémité de segment (11A, 11B) dans un sens direct (S1) de la trajectoire (X5), et
∘ au moins un capot (12), qui est disposé dans le prolongement du segment de piste (9A, 9B) le long de la trajectoire (X5), dans le sens direct (S1), au-delà de l'extrémité de segment (11A, 11B) ;
- au moins une poutre (20A, 20B), qui supporte le segment de piste (9A, 9B) et qui s'étend le long de la trajectoire (X5) en se terminant par une extrémité de poutre (21A, 21B) dans le sens direct (S1), la poutre (20A, 20B) comprenant une partie à remplacer (25A, 25B), s'étendant à partir de l'extrémité de poutre (21A, 21B), dans un sens opposé au sens direct (S1), le capot (12) étant supporté par la partie à remplacer (25A, 25B) ;
**caractérisé en ce que** le procédé comporte les étapes successives suivantes :
- séparation de la partie à remplacer (25A, 25B) de la poutre (20A, 20B), de sorte que la poutre (20A, 20B) se termine par une extrémité de coupure (26A, 26B) dans le sens direct (S1) ;
- adjonction d'au moins une pièce de renfort (50A, 50B) de l'extrémité de coupure (26A, 26B), en rapportant la pièce de renfort (50A, 50B) contre, ou en regard de, l'extrémité de coupure (26A, 26B), de façon à prolonger la poutre (20A, 20B) dans le sens direct (S1), la pièce de renfort (50A, 50B) étant essentiellement en matière plastique ; et
- montage du capot (12) sur la pièce de renfort (50A, 50B), de sorte que le capot (12) est supporté par la pièce de renfort (50A, 50B).

11. Procédé selon la revendication 10, **caractérisé en ce que** :
- la poutre (20A, 20B) présente au moins une alvéole vide (38A), qui s'étend le long de la trajectoire (X5) et qui débouche à l'extrémité de coupure (26A, 26B) ; et
- le procédé comprend une étape d'introduction d'au moins une barre de renfort (41) en matière plastique dans l'alvéole vide (38A), de façon ajustée, pour soutenir l'alvéole vide (38A), la matière plastique de la barre de renfort (41) étant de préférence la même matière plastique que la pièce de renfort (50A, 50B).

## Patentansprüche

1. System (1) zur elektrischen Versorgung eines Fahrzeugs über den Erdboden (3), wobei das System (1) aufweist:
- eine Bahn (5), die eine Trajektorie (X5) des Systems (1) definiert, wobei die Bahn (5) konzipiert ist, um in Kontakt mit einem Kontaktschleifer des Fahrzeugs zu sein während einer Verlagerung des Fahrzeugs entlang der Trajektorie (X5), wobei die Bahn (5) aufweist:
∘ wenigstens ein Bahnsegment (9A, 9B), das in Vorwärtsrichtung (S1) der Trajektorie (X5) durch ein Segmentende (11A, 11B) abschließt, und
∘ wenigstens einen Deckel (12), der in der Verlängerung des Bahnsegments (9A, 9B) entlang der Trajektorie (X5) angeordnet ist in der Vorwärtsrichtung (S1) über das Segmentende (11A, 11B) hinausgehend,
- wenigstens einen Träger (20A, 20B), der das Bahnsegment (9A, 9B) stützt und der sich entlang der Trajektorie (X5) erstreckt und durch ein Schnittende (26A, 26B) in der Vorwärtsrichtung (S1) abschließt,
**dadurch gekennzeichnet, dass** das System (1) ferner aufweist wenigstens ein Verstärkungsteil (50A, 50B), welches gegen das Schnittende (26A, 26B) angestückt ist, um den Träger (20A, 20B) in der Vorwärtsrichtung (S1) zu verlängern, wobei das Verstärkungsteil (50A, 50B) im Wesentlichen aus Kunststoffmaterial ist und den Deckel (12) stützt.

2. System gemäß Anspruch 1, **dadurch gekennzeichnet, dass** das Kunststoffmaterial des Verstärkungsteils (50A, 50B) aus Polyamid-6 ist, wohingegen der Träger (20A, 20B) bevorzugt aus einem extrudierten Glasfaserverbundmaterial ist.

3. System (1) gemäß irgendeinem der vorhergehenden Ansprüche, **dadurch gekennzeichnet, dass**:
- der Träger (20A, 20B) einen Trägerhals (22A, 22B) aufweist, der sich entlang der Trajektorie (X5) in der Vorwärtsrichtung (S1) bis zu dem Schnittende (26A, 26B) erstreckt, wobei das Bahnsegment (9A, 9B) in dem Trägerhals (22A, 22B) untergebracht ist, und
- das Verstärkungsteil (50A, 50B) einen Verstärkungshals (63A, 63B) aufweist, der den Trägerhals (22A, 22B) in der Vorwärtsrichtung (S1) verlängert, wobei der Deckel (12) wenigstens teilweise in dem Verstärkungshals (63A, 63B) angeordnet ist unter Gestützt-Sein durch das Verstärkungsteil (50A, 50B).

4. System (1) gemäß Anspruch 3, **dadurch gekennzeichnet, dass**:
- der Träger (20A, 20B) zwei Trägerränder (23A, 23B) aufweist, die den Trägerhals (22A, 22B) einfassen, und
- das Verstärkungsteil (50A, 50B) zwei Verstärkungsränder (64A, 64B) aufweist, die den Verstärkungshals (63A, 63B) einfassen unter Verlängern der Halsränder in Vorwärtsrichtung (S1), wobei der Deckel (12) wenigstens teilweise in dem Verstärkungshals (63A, 63B) angeordnet ist ohne Abdecken der Verstärkungsränder (64A, 64B).

5. System (1) gemäß Anspruch 4, **dadurch gekennzeichnet, dass**:
- der Träger (20A, 20B) zwei Antennentunnel (36A) aufweist, die sich in dem Träger (20A, 20B) erstrecken jeweils zugeordnet entlang den Trägerrändern (23A, 23B) und an dem Schnittende (26A, 26B) ausmünden,
- das Verstärkungsteil (50A, 50B) zwei Verstärkungsflügel (37A) aufweist, die vorstehend und entgegengesetzt sind, wobei jeder der beiden Verstärkungsflügel (37A) einen der Verstärkungsränder (64A, 64B) stützt, wobei das Verstärkungsteil (50A, 50B) zwei Antennenkanäle (60A) aufweist, wobei jeder der beiden Antennenkanäle (60A) einen der beiden Verstärkungsflügel (37A) durchquert, wobei das Verstärkungsteil (50A, 50B) derart angeordnet ist, dass jeder der beiden Antennenkanäle (60A) jeweils zugeordnet einen der beiden Antennentunnel (36A) in der Vorwärtsrichtung (S1) verlängert, und
- das System (1) aufweist wenigstens ein Antennenkabel (38), das einen der beiden Antennentunnel (36A) und der beiden Antennenkanäle (60A) durchdringt.

6. System (1) gemäß irgendeinem der vorhergehenden Ansprüche, **dadurch gekennzeichnet, dass**:
- das System (1) aufweist eine Stütze (32), auf welcher der Träger (20A, 20B) und das Verstärkungsteil (50A, 50B) ruhen, und
- das Verstärkungsteil (50A, 50B) einen Sockel (51A) aufweist, über welchen das Verstärkungsteil (50A, 50B) auf der Stütze (32) ruht, wobei der Sockel (51A) wenigstens eine Verankerungsausnehmung (52A, 53A) aufweist, die sich parallel zu der Trajektorie (X5) erstreckt und bezüglich der Trajektorie (X5) radial offen ist, wobei ein Verankerungsmaterial (57A), das in die Verankerungsausnehmung (52A, 53A) eingebracht ist, die Fixierung des Verstärkungsteils (50A, 50B) an der Stütze (32) gewährleistet.

7. System (1) gemäß irgendeinem der vorhergehenden Ansprüche, **dadurch gekennzeichnet, dass**:
- der Deckel (12) an dem Verstärkungsteil (50A, 50B) fixiert ist mittels wenigstens einer mechanischen Fixier-Vorrichtung (35), wobei die mechanische Vorrichtung (35) ein primäres Element, zum Beispiel eine Schraube oder einen Niet, und ein sekundäres Element aufweist, an dem das primäre Element angebracht ist, zum Beispiel eine Mutter,
- das Verstärkungsteil (50A, 50B) eine Zugangsöffnung (67A) aufweist, die in Vorwärtsrichtung (S1) an einer Zugangsseite (54A) des Verstärkungsteils (50A, 50B) ausmündet, und
- das primäre Element der mechanischen Vorrichtung (35) den Deckel (12) und das Verstärkungsteil (50A, 50B) durchdringt, um sich bis in die Zugangsöffnung (67A) zu erstrecken, in welcher das sekundäre Element untergebracht ist.

8. System (1) gemäß irgendeinem der vorhergehenden Ansprüche, **dadurch gekennzeichnet, dass**
- der Träger (20A, 20B) wenigstens einen Kabeltunnel (39A) aufweist, der sich entlang der Trajektorie (X5) erstreckt und am Schnittende (26A, 26B) ausmündet,
- das Verstärkungsteil (50A, 50B) wenigstens einen Kabelkanal (62A) aufweist, wobei das Verstärkungsteil (50A, 50B) derart angeordnet ist, dass der Kabelkanal (62A) den Kabeltunnel in Vorwärtsrichtung (S1) verlängert, und
- das System (1) aufweist wenigstens ein Kabel zur Versorgung (40) der Bahn (5), welches den Kabeltunnel (39A) und den Kabelkanal (62A) durchdringt.

9. System gemäß irgendeinem der vorhergehenden Ansprüche, **dadurch gekennzeichnet, dass**:
- das wenigstens eine Verstärkungsteil (50A, 50B) aufweist:
o das Verstärkungsteil (50A), das gegen das Schnittende (26A, 26B) angestückt ist, um den Träger (20A, 20B) in Vorwärtsrichtung (S1) zu verlängern, und
o ein anderes Verstärkungsteil (50B), wobei die Verstärkungsteile (50A, 50B) längs im Abstand sind, um einen Zwischen-Träger-Raum (30) des Systems (1) frei zu lassen und zu begrenzen,
- der Deckel (12) zugleich von den beiden Verstärkungsteilen (50A, 50B) gestützt ist unter Längs-Brückenverbinden der Verstärkungsteile (50A, 50B), wobei der Deckel (12) den Zwischen-Träger-Raum (30) von oben her begrenzt.

10. Verfahren zum Verstärken eines Systems (1) zur elektrischen Versorgung eines Fahrzeugs über den Erdboden (3), wobei das System (1) aufweist:
- eine Bahn (5), die eine Trajektorie (X5) des Systems (1) definiert, wobei die Bahn (5) konzipiert ist, um in Kontakt mit einem Kontaktschleifer des Fahrzeugs zu sein während einer Verlagerung des Fahrzeugs entlang der Trajektorie (X5), wobei die Bahn (5) aufweist:
∘ wenigstens ein Bahnsegment (9A, 9B), das in Vorwärtsrichtung (S1) der Trajektorie (X5) durch ein Segmentende (11A, 11B) abschließt, und
∘ wenigstens einen Deckel (12), der in der Verlängerung des Bahnsegments (9A, 9B) entlang der Trajektorie (X5) angeordnet ist in der Vorwärtsrichtung (S1) über das Segmentende (11A, 11B) hinausgehend,
- wenigstens einen Träger (20A, 20B), der das Bahnsegment (9A, 9B) stützt und der sich entlang der Trajektorie (X5) erstreckt und durch ein Trägerende (21A, 21B) in der Vorwärtsrichtung abschließt, wobei der Träger (20A, 20B) einen zu ersetzenden Teil (25A, 25B) aufweist, der sich ausgehend von dem Trägerende (21A, 21B) erstreckt in eine Richtung entgegengesetzt zur Vorwärtsrichtung (S1), wobei der Deckel (12) von dem zu ersetzenden Teil (24A, 25B) gestützt ist, **dadurch gekennzeichnet, dass** das Verfahren die folgenden sukzessiven Schritte aufweist:
- Trennen des zu ersetzenden Teils (25A, 25B) des Trägers (20A, 20B), sodass der Träger (20A, 20B) durch ein Schnittende (26A, 26B) in der Vorwärtsrichtung (S1) abschließt,
- Hinzufügen wenigstens eines Verstärkungsteils (50A, 50B) an dem Schnittende (26A, 26B) unter Anstücken des Verstärkungsteils (50A, 50B) gegen das, oder gegenüber dem, Schnittende (26A, 26B), um den Träger (20A, 20B) in der Vorwärtsrichtung (S1) zu verlängern, wobei das Verstärkungsteil (50A, 50B) im Wesentlichen aus Kunststoffmaterial ist, und
- Montieren des Deckels (12) an das Verstärkungsteil (50A, 50B), sodass der Deckel (12) von dem Verstärkungsteil (50A, 50B) gestützt ist.

11. Verfahren gemäß Anspruch 10, **dadurch gekennzeichnet, dass**:
- der Träger (20A, 20B) wenigstens einen leeren Tunnel (38A) hat, der sich entlang der Trajektorie (X5) erstreckt und der am Schnittende (26A, 26B) ausmündet, und
- das Verfahren aufweist einen Schritt des Einbringens wenigstens einer Verstärkungsstange (41) aus Kunststoffmaterial in den leeren Tunnel (38A) in eingepasster Weise zum Unterstützen des leeren Tunnels (38A), wobei das Kunststoffmaterial der Verstärkungsstange (41) bevorzugt aus dem gleichen Kunststoffmaterial wie das Verstärkungsteil (50A, 50B) ist.

## Claims

1. System (1) for powering a vehicle via the ground (3), wherein the system (1) comprises:
- a track (5), which defines a trajectory (X5) of the system (1), wherein the track (5) is designed to be in contact with a pickup shoe of the vehicle during movement of the vehicle along the trajectory (X5), wherein the track (5) comprises:
o at least one track segment (9A, 9B) terminating at a segment end (11A, 11B) in a forward direction (S1) of the trajectory (X5), and
o at least one hood (12), which is arranged in the extension of the track segment (9A, 9B) along the trajectory (X5) in the forward direction (S1) beyond the segment end (11A, 11B);
- at least one stringer (20A, 20B), which supports the track segment (9A, 9B) and which extends along the trajectory (X5) ending with a cut end (26A, 26B) in the forward direction (S1);
**characterized in that** the system (1) further comprises at least one reinforcing piece (50A, 50B) which is applied to the cut end (26A, 26B) in order to extend the stringer (20A, 20B) in the forward direction (S1), wherein the reinforcing piece (50A, 50B) is essentially made of plastic and supports the hood (12).

2. System (1) according to claim 1, **characterized in that** the plastic material of the reinforcing piece (50A, 50B) is polyamide-6, while the stringer (20A, 20B) is preferably made of composite material of pultruded fiberglass.

3. System (1) according to any one of the preceding claims, **characterized in that**:
- the stringer (20A, 20B) comprises a stringer groove (22A, 22B), which extends along the trajectory (X5), to the cut end (26A, 26B) in the forward direction (S1), while the track segment (9A, 9B) is housed in the stringer groove (22A, 22B); and
- the reinforcing piece (50A, 50B) comprises a reinforcing groove (63A, 63B), which extends the stringer groove (22A, 22B) in the forward direction (S1), while the hood (12) is arranged at least partially in the reinforcing groove (63A, 63B) and is supported by the reinforcing piece (50A, 50B).

4. System (1) according to claim 3, **characterized in that**:
- the stringer (20A, 20B) comprises two stringer edges (23A, 23B) bordering the stringer groove (22A, 22B); and
- the reinforcing piece (50A, 50B) comprises two reinforcing edges (64A, 64B) bordering the reinforcing groove (63A, 63B) by extending the grooves in the forward direction (S1), wherein the hood (12) is arranged at least partially in the reinforcing groove (63A, 63B) without covering the reinforcing edges (64A, 64B).

5. System (1) according to claim 4, **characterized in that**:
- the stringer (20A, 20B) comprises two antenna holes (36A), which respectively extend in the stringer (20A, 20B) along the stringer edges (23A, 23B), and open at the cut end (26A, 26B);
- the reinforcing piece (50A, 50B) comprises two reinforcing wings (37A), which protrude opposite one another, wherein each of the two reinforcing wings (37A) support one of the reinforcing edges (64A, 64B), wherein the reinforcing piece (50A, 50B) comprises two antenna ducts (60A), wherein each of the two antenna ducts (60A) passes through one of the two reinforcing wings (37A), wherein the reinforcing piece (50A, 50B) is so arranged that each of the two antenna ducts (60A) respectively extends one of the two antenna holes (36A) in the forward direction (S1); and
- the system (1) comprises at least one antenna cable (38), which passes through one of the two antenna holes (36A) and the two antenna ducts (60A).

6. System (1) according to any one of the preceding claims, **characterized in that**:
- the system (1) comprises a support (32) on which the stringer (20A, 20B) and the reinforcing piece (50A, 50B) rest; and
- the reinforcing piece (50A, 50B) comprises a base (51A), through which the reinforcing piece (50A, 50B) rests on the support (32), wherein the base (51A) comprises at least one sealing notch (52A, 53A) that extends parallel to the trajectory (X5) and opens radially with respect to the trajectory (X5), wherein a sealing material (57A) is introduced into the sealing notch (52A, 53A) to ensure the fixing of the reinforcing piece (50A, 50B) to the support (32).

7. System (1) according to any one of the preceding claims, **characterized in that**:
- the hood (12) is fixed on the reinforcing piece (50A, 50B) using at least one mechanical fixing device (35), wherein the mechanical device (35) comprises a primary element, for example a screw or a rivet, and a secondary element to which the primary element is attached, for example a nut;
- the reinforcing piece (50A, 50B) comprises an access hole (67A), which opens in the forward direction (S1) on an access face (54A) of the reinforcing piece (50A, 50B); and
- the primary element of the mechanical device (35) passes through the hood (12) and the reinforcing piece (50A, 50B) in order to extend into the access hole (67A), in which is housed the secondary element.

8. System (1) according to any one of the preceding claims, **characterized in that**:
- the stringer (20A, 20B) comprises at least one wiring hole (39A), which extends along the trajectory (X5) and which opens at the cut end (26A, 26B);
- the reinforcing piece (50A, 50B) comprises at least one wiring duct (62A), wherein the reinforcing piece (50A, 50B) is arranged in such a way that the wiring duct (62A) extends the wiring compartment in the forward direction (S1); and
- the system (1) comprises at least one power cable (40) of the track (5), which passes through the wiring hole (39A) and the wiring duct (62A).

9. System according to any one of the preceding claims, **characterized in that**:
- said at least one reinforcing piece (50A, 50B) comprises:
∘ the reinforcing piece (50A) added against the cut end (26A, 26B), so as to extend the stringer (20A, 20B) in the forward direction (S1), and
∘ another reinforcing piece (50B), the reinforcing pieces (50A, 50B) being longitudinally spaced so as to leave free and delimit an inter-stringer space (30) of the system (1);
- the hood (12) is supported by both reinforcing pieces (50A, 50B), as a bridge, the hood (12) delimiting the inter-stringer space (30) from above.

10. Method for reinforcing a system (1) for supplying a vehicle with power via the ground (3), wherein the system (1) comprises:
- a track (5), which defines a trajectory (X5) of the system (1), wherein the track (5) is designed to be in contact with a pickup shoe of the vehicle during movement of the vehicle along the trajectory (X5), wherein the track (5) comprises:
∘ at least one track segment (9A, 9B) terminating at a segment end (11A, 11B) in a forward direction (S1) of the trajectory (X5), and
∘ at least one hood (12), which is arranged in the extension of the track segment (9A, 9B) along the trajectory (X5) in the forward direction (S1) beyond the segment end (11A, 11B);
- at least one stringer (20A, 20B) which supports the track segment (9A, 9B) and which extends along the trajectory (X5) terminating in a stringer end (21A, 21B) in the forward direction (S1), wherein the stringer (20A, 20B) comprises a portion to be replaced (25A, 25B), extending from the stringer end (21A, 21B) in a direction opposite to the forward direction (S1), wherein the hood (12) is supported by the portion to be replaced (25A, 25B);
**characterized in that** the method comprises the following successive steps:
- separating the portion to be replaced (25A, 25B) from the stringer (20A, 20B), so that the stringer (20A, 20B) terminates with a cut end (26A, 26B) in the forward direction (S1) ;
- addition of at least one reinforcing piece (50A, 50B) of the cut end (26A, 26B), by applying the reinforcing piece (50A, 50B) against, or opposite, the cut end (26A, 26B) in order to extend the stringer (20A, 20B) in the forward direction (S1), wherein the reinforcing piece (50A, 50B) is made essentially of plastic material; and
- mounting the hood (12) on the reinforcing piece (50A, 50B), so that the hood (12) is supported by the reinforcing piece (50A, 50B).

11. Method according to claim 10, **characterized in that**:
- the stringer (20A, 20B) has at least one empty hole (38A), which extends along the trajectory (X5) and which opens at the cut end (26A, 26B); and
- the method comprises a step of introducing at least one reinforcing bar (41) of plastic material into the empty hole (38A) in a controlled manner in order to support the empty hole (38A), wherein the plastic material of the reinforcing bar (41) is preferably the same plastic as that of the reinforcing piece (50A, 50B).
